# FASCICULE DE BREVET EUROPEEN

(11) **EP 2 475 866 B1**
(45) Date de publication et mention de la délivrance du brevet: **10.07.2013**
(21) Numéro de dépôt: 10763814.0
(22) Date de dépôt: 06.09.2010
(51) Int. Cl.: F02K 9/97

(54) **MOTEUR FUSEE A DIVERGENT DEPLOYABLE.**
RAKETENMOTOR MIT AUSZIEHBAREM DIVERGENTEM TEIL
ROCKET ENGINE WITH EXTENDABLE DIVERGENT

(30) Priorité: 10.09.2009 FR 0956178
(43) Date de publication de la demande: 18.07.2012
(73) Titulaire: Snecma, 75015 Paris (FR)
(72) Inventeur: DOBEK, Olivier, F-27200 Vernon (FR); DAVID, Noël, F-27640 Breuilpont (FR); RAVIER, Nicolas, F-27950 Saint Marcel (FR)
(74) Mandataire: Thévenet, Jean-Bruno
(86) Numéro de dépôt international: PCT/FR2010/051844
(87) Numéro de publication internationale: WO 2011/030048

(56) Documents cités:
- EP-A1- 0 516 519
- US-A- 4 383 407
- US-A- 5 048 289
- US-A- 5 232 534
- US-B2- 7 299 636

## Description

### Domaine de l'invention

La présente invention concerne un moteur fusée à divergent déployable, comprenant une tuyère d'échappement des gaz issus d'une chambre de combustion, ladite tuyère présentant un axe longitudinal et comprenant une première partie définissant un col de tuyère et un premier tronçon de divergent fixe, au moins un deuxième tronçon de divergent déployable de section supérieure à celle du premier tronçon de divergent fixe et un mécanisme de déploiement du deuxième tronçon de divergent déployable disposé à l'extérieur des premier et deuxième tronçons de divergent.

### Art antérieur

On utilise fréquemment, notamment sur des étages de lanceurs, des tuyères de moteur-fusée à divergent déployable qui permettent d'adapter la section de sortie de la tuyère en fonction de la pression ambiante, laquelle diminue entre les faibles altitudes proches du sol et les altitudes élevées pour lesquelles le véhicule spatial quitte l'atmosphère terrestre, de telle sorte qu'une poussée optimale soit conservée malgré les changements d'altitude.

Le déploiement de la partie déployable du divergent s'effectue de façon automatique à partir d'une commande électrique ou hydraulique, voire pneumatique.

Des exemples de divergents déployables de tuyères de moteurs-fusées sont décrits notamment dans les documents US 4 383 407, US 5 048 289, EP 0 516 519 B1 et US 7 299 636 B2.

Les divergents déployables de forme sensiblement conique peuvent être métalliques avec des circuits de refroidissement régénératifs ou en matériau composite.

On connaît en particulier le moteur VINCI qui est un moteur-fusée à ergols cryotechniques à divergent déployable en matériau composite thermostructural et dispose d'un mécanisme de déploiement (MDD) composé d'une vis sans fin et d'un système de fixation d'une part sur la partie conique supérieure fixée à la structure de la chambre de combustion et d'autre part à la partie conique inférieure mobile du divergent.

Le mécanisme de déploiement est situé en vis-à-vis du divergent qui, en fonctionnement du moteur-fusée, émet par rayonnement thermique un flux pouvant atteindre, à certains endroits, 250 kW par m² de divergent.

Ce fort flux thermique incident provoque une augmentation globale de la température des éléments constituant le mécanisme de déploiement, ce qui contribue à faire baisser leurs propriétés mécaniques et, dans certains cas peut même affecter l'intégrité de ces éléments et conduire à une destruction de certains de ces éléments.

### Définition et objet de l'invention

L'invention vise à remédier aux inconvénients précités et à augmenter la fiabilité d'un moteur-fusée à divergent déployable en minimisant les effets du rayonnement thermique émis par le divergent lors du fonctionnement du moteur-fusée.

Ces buts sont atteints, conformément à l'invention, grâce à un moteur-fusée à divergent déployable, comprenant une tuyère d'échappement des gaz issus d'une chambre de combustion, ladite tuyère présentant un axe longitudinal comprenant une première partie définissant un col de tuyère et un premier tronçon de divergent fixe, au moins un deuxième tronçon de divergent déployable de section supérieure à celle du premier tronçon de divergent fixe et un mécanisme de déploiement du deuxième tronçon de divergent déployable disposé à l'extérieur des premier et deuxième tronçons de divergent, caractérisé en ce qu'il comprend en outre un écran de protection thermique rigide interposé entre le mécanisme de déploiement et le premier tronçon de divergent fixe, et en ce que l'écran de protection thermique présente une paroi convexe sur sa face tournée vers le premier tronçon de divergent fixe.

Avantageusement, l'écran de protection thermique comprend en outre des ailettes latérales de part et d'autre de ladite paroi convexe.

De préférence, le moteur-fusée comprend en outre une bande de protection thermique souple disposée entre l'écran de protection thermique rigide et le mécanisme de déploiement.

Avantageusement, la bande de protection thermique souple s'étend sur toute la hauteur du premier tronçon de divergent fixe tandis que l'écran de protection thermique rigide s'étend sur la seule partie inférieure du premier tronçon de divergent fixe.

Avantageusement, l'écran de protection thermique rigide est réalisé en matériau métallique réfractaire tel qu'un alliage de tungstène et/ou de molybdène.

Avantageusement, la bande de protection thermique souple est réalisée en toile de borosilicate et de fibres d'alumine.

Selon un mode de réalisation particulier, le mécanisme de déploiement comprend une vis sans fin solidaire du premier tronçon de divergent fixe et un écrou à billes engagé dans la vis sans fin et solidaire de la partie supérieure du deuxième tronçon de divergent mobile.

Avantageusement, l'écrou à billes est relié à la partie supérieure du deuxième tronçon de divergent mobile par une pièce en forme d'ailette.

### Brève description des dessins

D'autres caractéristiques et avantages de l'invention ressortiront de la description suivante de modes particuliers de réalisation, donnés à titre d'exemples, en référence aux dessins annexés, sur lesquels :
- la figure 1 est une vue de côté et partiellement en coupe longitudinale montrant un exemple de divergent déployable de moteur-fusée en position rétractée, auquel l'invention est applicable,
- la figure 2 est une vue de côté et partiellement en coupe longitudinale du divergent déployable de la figure 1 en position déployée.
- la figure 3 est une vue de détail d'un exemple de mécanisme de déploiement de divergent équipé d'un exemple de système de protection thermique selon la présente invention,
- la figure 4 est une vue de dessus du système de protection thermique selon l'invention pris selon la flèche F de la figure 3, et
- les figures 5 et 6 sont des vues en perspective montrant des exemples d'écran utilisables dans le système de protection thermique selon l'invention.

### Description détaillée de modes de réalisation préférentiels

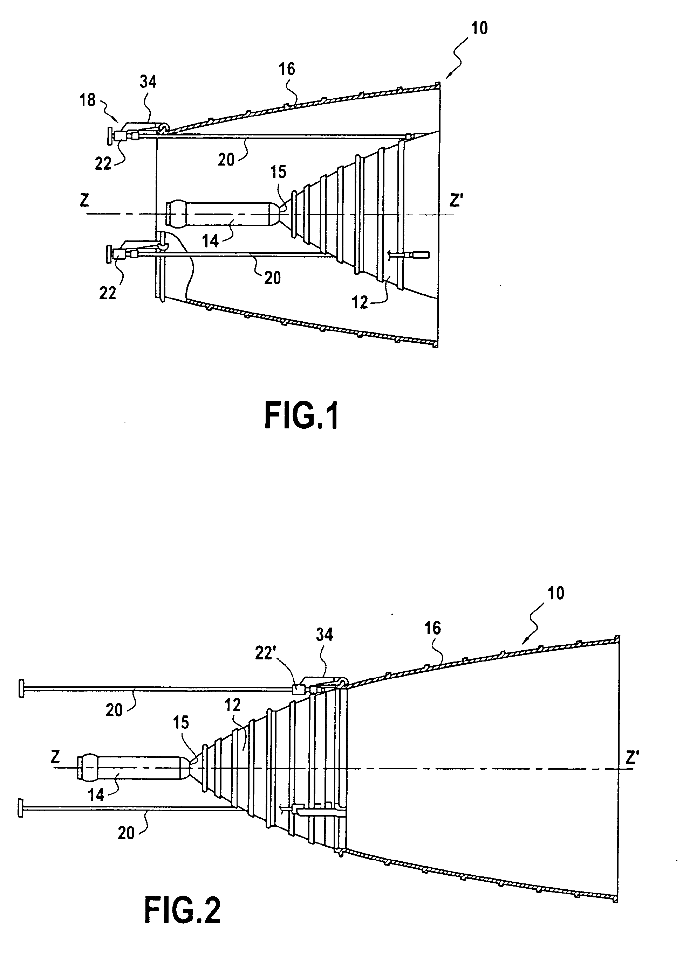

On voit sur les figures 1 et 2 un exemple de moteur-fusée comprenant une chambre de combustion 14 à laquelle est rattachée une tuyère 10 d'axe longitudinal ZZ' comprenant un col de tuyère 15 et un divergent déployable.

La tuyère 10 comprend une première partie fixée à la chambre de combustion 14 et définissant le col de tuyère 15 ainsi qu'un tronçon 12 de divergent fixe ayant une forme sensiblement tronconique et une deuxième partie constituée par un tronçon 16 de divergent déployable présentant une forme sensiblement tronconique avec une section supérieure à celle du tronçon 12 de divergent fixe.

Un mécanisme 18 de déploiement de divergent (MDD) permet de modifier de façon sélective la position du tronçon 16 de divergent déployable par rapport à celle du tronçon 12 de divergent fixe.

On voit sur la figure 1, le tronçon 16 de divergent déployable placé en position rétractée autour du tronçon 12 de divergent fixe et de la chambre de combustion 14. Cette position rétractée peut correspondre à une phase de transport pour un moteur-fusée d'étage supérieur d'un lanceur. Cette position rétractée peut aussi correspondre à une première phase de fonctionnement dans laquelle les gaz de combustion s'échappent à travers le seul tronçon 12 de divergent fixe.

La figure 2 montre le tronçon 16 de divergent déployable en position déployée dans laquelle ce tronçon 16 de divergent prolonge vers l'aval le tronçon 12 de divergent fixe de manière à créer un divergent de plus grande longueur et de plus grand diamètre de sortie.

Le mécanisme 18 de déploiement du divergent peut être réalisé de diverses manières avec par exemple des bras de levier ou des tiges de guidage.

Selon l'exemple représenté sur les figures 1 à 4, le mécanisme 18 de déploiement de divergent comprend plusieurs (par exemple trois à six) tiges 20 parallèles à l'axe ZZ' qui incluent chacune une vis sans fin 26 coopérant avec un écrou à billes 22. Chaque tige 20 est fixée à sa partie inférieure à un bloc de fixation 25 qui est monté à la partie aval du tronçon 12 de divergent fixe. Les tiges 20 présentent des extrémités supérieures solidaires de la structure de support du moteur-fusée, non représentée sur les dessins. L'écrou à billes 22 coopérant avec la vis sans fin 26 d'une tige de guidage 20 est lui-même raccordé à la partie supérieure du tronçon 16 de divergent déployable. L'élément de raccord entre l'écrou à billes 22 et le tronçon 16 de divergent déployable peut comprendre une plaque 34 en forme d'ailette capable d'évacuer la chaleur reçue et une pince 35 se fixant à la partie supérieure du tronçon 16 de divergent déployable.

Dans la position rétractée du tronçon 16 de divergent déployable, représentée sur la figure 1, les écrous à billes 22 du mécanisme de déploiement 18 et les plaques de fixation 34 sont situés en position haute des tiges 20.

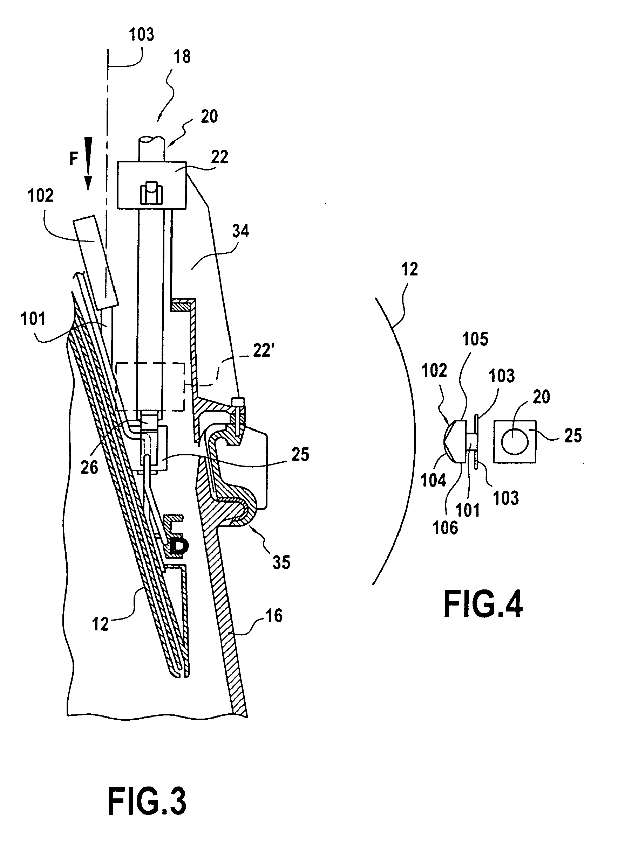

Dans la position déployée du tronçon 16 de divergent déployable, représentée sur la figure 2, les écrous à billes 22 (repérés dans cette position par la référence 22' sur les figures 2 et 3) et les plaques de fixation 34 sont situés au voisinage de la jonction entre le tronçon 2 de divergent fixe et le tronçon 16 de divergent déployable.

La paroi du tronçon 12 de divergent fixe peut être en métal et dans ce dernier cas, il est avantageux que cette paroi soit refroidie par un circuit de refroidissement régénératif. La paroi du tronçon 12 de divergent fixe comme la paroi du tronçon 16 de divergent déployable, peuvent aussi avantageusement être en matériau composite, par exemple à matrice céramique.

Lors du fonctionnement du moteur-fusée en position déployée du tronçon 16 de divergent déployable, le divergent et en particulier le tronçon 12 de divergent fixe émet par rayonnement thermique un flux pouvant atteindre, à certains endroits 250 kW par m² de divergent, le divergent atteignant lui-même des températures pouvant excéder 1400 K.

Conformément à l'invention, un écran de protection thermique 102 relié par un moyen de liaison 101 à la partie aval fixe du tronçon 12 de divergent fixe est interposé entre le tronçon 12 de divergent fixe et le mécanisme 18 de déploiement de divergent afin de protéger ce dernier contre le rayonnement thermique émis par le divergent.

L'écran thermique 102 rigide protège la partie basse du mécanisme 18 de déploiement de divergent.

Comme on peut le voir sur les figures 3 à 5, l'écran thermique 102 présente une paroi 104 convexe sur sa face tournée vers le tronçon 12 de divergent fixe.

La convexité de l'écran 102 permet de réduire son facteur de vue par rapport au tronçon 12 de divergent fixe et permet ainsi à ce dernier de rayonner vers le vide sidéral, de telle sorte que grâce à l'écran 102 la surchauffe du divergent est diminuée.

La convexité de l'écran thermique 102 permet également d'augmenter la rigidité de celui-ci par rapport à un écran plat.

Des ailettes latérales 105, 106 sont avantageusement formées sur l'écran thermique 102 de part et d'autre de la paroi convexe 104 afin d'augmenter l'échange de calories par rayonnement vers le vide sidéral et également de contribuer à rigidifier la structure.

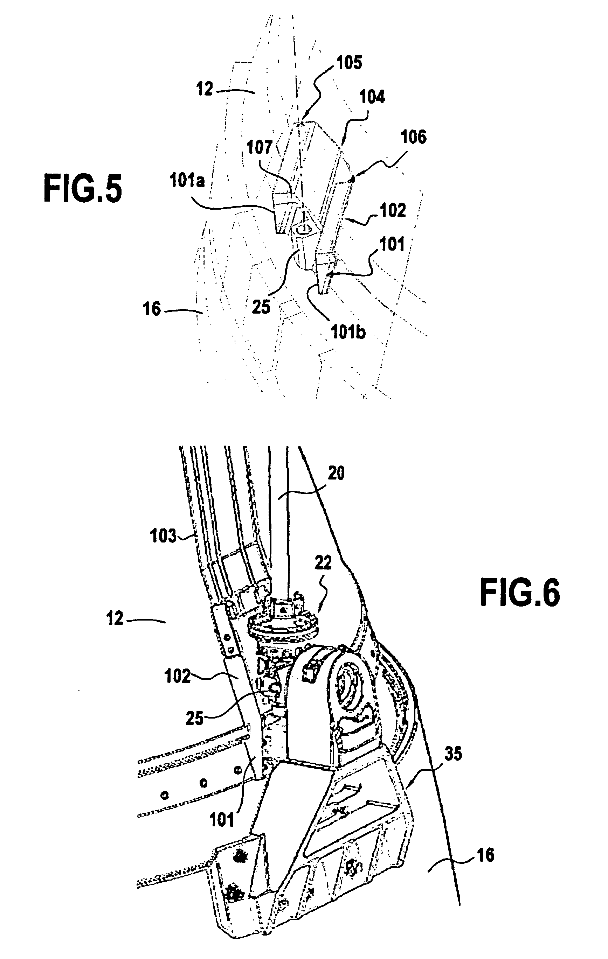

Dans l'exemple de la figure 5, le moyen 101 de liaison de l'écran de protection thermique 102 à la partie aval fixe du tronçon 12 de divergent fixe comprend une bande de fixation qui est reliée par des extrémités latérales 101a, 101b recourbées, formant des pattes de liaison, aux ailettes latérales 105, 106 de l'écran thermique 102, une fente 107 étant ménagée entre la paroi convexe 104 et la bande de fixation 101.

Avantageusement, une bande 103 de protection thermique souple est disposée entre l'écran 102 de protection thermique rigide et le mécanisme 18 de déploiement de divergent (voir les figures 3 et 6).

La bande 103 de protection thermique souple s'étend sur toute la hauteur du tronçon 12 de divergent fixe tandis que l'écran 102 rigide de protection thermique s'étend sur la seule partie inférieure du tronçon 12 de divergent fixe.

La bande 103 de protection thermique souple est ainsi disposée entre chaque tige 20 et le tronçon 12 de divergent fixe. Elle n'est pas déployable, ce qui facilite son installation. La bande 103 de protection thermique souple permet aux tiges 20 d'être légères et d'échanger des calories vers l'espace par rayonnement. Une telle protection thermique souple ne génère pas de charge thermomécanique aux interfaces et sa masse reste faible.

L'écran de protection thermique rigide 102 présente lui-même une hauteur limitée pour ne pas augmenter la masse de façon excessive tout en protégeant la partie inférieure la plus sensible du mécanisme 18 de déploiement de divergent. La paroi 104 convexe de l'écran 102 peut présenter une section courbe ou correspondant à une portion de polygone.

Grâce à l'écran thermique rigide 102 et à la bande 103 de protection thermique souple, la température est réduite au niveau du mécanisme 18 de déploiement de divergent et ce mécanisme ne risque pas d'être endommagé en cours de fonctionnement.

Avantageusement, l'écran 102 de protection thermique peut être réalisé en un matériau métallique réfractaire comme un alliage à base de tungstène, de molybdène ou de tungstène et de molybdène et la bande 103 de protection thermique souple est réalisée en toile de borosilicate et de fibre d'alumine.

## Revendications

1. Moteur-fusée à divergent déployable, comprenant une tuyère (10) d'échappement des gaz issus d'une chambre de combustion (14), ladite tuyère (10) présentant un axe longitudinal (ZZ') comprenant une première partie définissant un col de tuyère (15) et un premier tronçon (12) de divergent fixe, au moins un deuxième tronçon (16) de divergent déployable de section supérieure à celle du premier tronçon (12) de divergent fixe et un mécanisme (18) de déploiement du deuxième tronçon (16) de divergent déployable disposé à l'extérieur des premier et deuxième tronçons (12, 16) de divergent,
**caractérisé en ce qu'**il comprend en outre un écran (102) de protection thermique rigide interposé entre le mécanisme de déploiement (18) et le premier tronçon (12) de divergent fixe,et **en ce que** l'écran de protection thermique (102) présente une paroi convexe (104) sur sa face tournée vers le premier tronçon (12) de divergent fixe.

2. Moteur-fusée selon la revendication 1, **caractérisé en ce que** l'écran de protection thermique comprend en outre des ailettes latérales (105, 106) de part et d'autre de ladite paroi convexe (104).

3. Moteur-fusée selon la revendication 2, **caractérisé en ce qu'**il comprend en outre une bande (103) de protection thermique souple disposée entre l'écran de protection thermique rigide (102) et le mécanisme (18) de déploiement.

4. Moteur-fusée selon la revendication 3, **caractérisé en ce que** la bande (103) de protection thermique souple s'étend sur toute la hauteur du premier tronçon (12) de divergent fixe tandis que l'écran (102) de protection thermique rigide s'étend sur la seule partie inférieure du premier tronçon (12) de divergent fixe.

5. Moteur-fusée selon l'une quelconque des revendications 1 à 4, **caractérisé en ce que** l'écran (102) de protection thermique rigide est réalisé en un matériau métallique réfractaire.

6. Moteur-fusée selon la revendication 5, **caractérisé en ce que** l'écran (102) de protection thermique rigide est réalisé en alliage de tungstène, en alliage de molybdène ou en alliage de tungstène et de molybdène.

7. Moteur-fusée selon l'une des revendications 3 et 4, **caractérisé en ce que** la bande (103) de protection thermique souple est en toile de borosilicate et de fibres d'alumine.

8. Moteur-fusée selon l'une quelconque des revendications 1 à 7, **caractérisé en ce que** le mécanisme de déploiement (18) comprend une vis sans fin (26) solidaire du premier tronçon (12) de divergent fixe et un écrou à billes (22) engagé dans la vis sans fin (26) et solidaire de la partie supérieure du deuxième tronçon (16) de divergent mobile.

9. Moteur-fusée selon la revendication 8, **caractérisé en ce que** l'écrou à billes (22) est relié à la partie supérieure du deuxième tronçon (16) de divergent mobile par une pièce (34) en forme d'ailette.

10. Moteur-fusée selon la revendication 2, **caractérisé en ce que** les ailettes latérales (105, 106) de l'écran de protection thermique (102) sont reliées à des pattes (101a, 101b) solidaires d'une bande (101) de fixation sur la partie aval du premier tronçon (12) de divergent fixe.

## Patentansprüche

1. Raketentriebwerk mit ausfahrbarem divergentem Düsenteil, umfassend eine Düse (10) für das Entweichen der aus einer Brennkammer (14) kommenden Gase, wobei die Düse (10), die eine Längsachse (ZZ') aufweist, einen ersten Teil, der einen Düsenhals (15) definiert, und einen ersten festen divergenten Düsenteilabschnitt (12), wenigstens einen zweiten ausfahrbaren divergenten Düsenteilabschnitt (16), dessen Querschnitt größer als der des ersten festen divergenten Düsenteilabschnitts (12) ist, sowie einen Mechanismus (18) zum Ausfahren des zweiten ausfahrbaren divergenten Düsenteilabschnitts (16), der außerhalb des ersten und des zweiten divergenten Düsenteilabschnitts (12, 16) angeordnet ist, umfaßt,
**dadurch gekennzeichnet, daß** es ferner einen starren Wärmeschutzschild (102) umfaßt, der zwischen dem Ausfahrmechanismus (18) und dem ersten festen divergenten Düsenteilabschnitt (12) angeordnet ist, und daß der Wärmeschutzschild (102) auf seiner dem ersten festen divergenten Düsenteilabschnitt (12) zugewandten Seite eine konvexe Wand (104) aufweist.

2. Raketentriebwerk nach Anspruch 1, **dadurch gekennzeichnet, daß** der Wärmeschutzschild ferner auf beiden Seiten der konvexen Wand (104) Seitenrippen (105, 106) umfaßt.

3. Raketentriebwerk nach Anspruch 2, **dadurch gekennzeichnet, daß** es ferner einen flexiblen Wärmeschutzstreifen (103), der zwischen dem starren Wärmeschutzschild (102) und dem Ausfahrmechanismus (18) angeordnet ist, umfaßt.

4. Raketentriebwerk nach Anspruch 3, **dadurch gekennzeichnet, daß** der flexible Wärmeschutzstreifen (103) sich über die gesamte Höhe des ersten festen divergenten Düsenteilabschnitts (12) erstreckt, während der starre Wärmeschutzschild (102) sich lediglich über den unteren Teil des ersten festen divergenten Düsenteilabschnitts (12) erstreckt.

5. Raketentriebwerk nach einem der Ansprüche 1 bis 4, **dadurch gekennzeichnet, daß** der starre Wärmeschutzschild (102) aus einem feuerfesten metallischen Werkstoff gefertigt ist.

6. Raketentriebwerk nach Anspruch 5, **dadurch gekennzeichnet, daß** der starre Wärmeschutzschild (102) aus Wolframlegierung, aus Molybdänlegierung oder aus Wolfram- und Molybdänlegierung gefertigt ist.

7. Raketentriebwerk nach einem der Ansprüche 3 und 4, **dadurch gekennzeichnet, daß** der flexible Wärmeschutzstreifen (103) aus einem Tuch aus Borosilikat und Aluminiumoxidfasern besteht.

8. Raketentriebwerk nach einem der Ansprüche 1 bis 7, **dadurch gekennzeichnet, daß** der Ausfahrmechanismus (18) eine Schnecke (26), die mit dem ersten festen divergenten Düsenteilabschnitt (12) fest verbunden ist, sowie eine Kugelmutter (22), die in die Schnecke (26) gesteckt und mit dem oberen Teil des zweiten beweglichen divergenten Düsenteilabschnitts (16) fest verbunden ist, umfaßt.

9. Raketentriebwerk nach Anspruch 8, **dadurch gekennzeichnet, daß** die Kugelmutter (22) mit dem oberen Teil des zweiten beweglichen divergenten Düsenteilabschnitts (16) über ein flügelförmiges Teil (34) verbunden ist.

10. Raketentriebwerk nach Anspruch 2, **dadurch gekennzeichnet, daß** die Seitenrippen (105, 106) des Wärmeschutzschilds (102) mit Laschen (101 a, 101 b) verbunden sind, welche mit einem Streifen (101) zur Befestigung an dem stromabwärtigen Teil des ersten festen divergenten Düsenteilabschnitts (12) fest verbunden sind.

## Claims

1. A rocket engine with an extendible exit cone, comprising an exhaust nozzle (10) for gas from a combustion chamber (14), said nozzle (10) presenting a longitudinal axis (ZZ') and having a first portion defining a nozzle throat (15) and a stationary first exit cone segment (12), at least one extendible second exit cone segment (16) of section greater than the section of the stationary first exit cone segment (12), and an extension mechanism (18) for extending the extendible second exit cone segment (16), the mechanism being located outside the first and second exit cone segments (12, 16), the rocket engine being **characterized in that** it further comprises a rigid thermal protection shield (102) interposed between the extension mechanism (18) and the stationary first exit cone segment (12), and **in that** the thermal protection shield (102) presents a convex wall (104) on its face facing towards the stationary first exit cone segment (12).

2. A rocket engine according to claim 1, **characterized in that** the thermal protection shield further comprises side fins (105, 106) on either side of said convex wall (104).

3. A rocket engine according to claim 2, **characterized in that** it further comprises a flexible thermal protection strip (103) arranged between the rigid thermal protection shield (102) and the extension mechanism (18).

4. A rocket engine according to claim 3, **characterized in that** the flexible thermal protection strip (103) extends over the full height of the stationary first exit cone segment (12) while the rigid thermal protection shield (102) extends over only the lower portion of the stationary first exit cone segment (12).

5. A rocket engine according to any one of claims 1 to 4, **characterized in that** the rigid thermal protection shield (102) is made of a refractory metal material.

6. A rocket engine according to claim 5, **characterized in that** the rigid thermal protection shield (102) is made of a tungsten alloy, of a molybdenum alloy, or of a tungsten and molybdenum alloy.

7. A rocket engine according to claim 3 or claim 4, **characterized in that** the flexible thermal protection strip (103) is made of an alumina fiber and borosilicate fabric.

8. A rocket engine according to any one of claims 1 to 7, **characterized in that** the extension mechanism (18) comprises a wormscrew (26) secured to the stationary first exit cone segment (12) and a ball nut (22) engaged on the wormscrew (26) and secured to the upper portion of the movable second exit cone segment (16).

9. A rocket engine according to claim 8, **characterized in that** the ball nut (22) is connected to the upper portion of the movable second exit cone segment (16) by a fin-shaped part (34).

10. A rocket engine according to claim 2, **characterized in that** the side fins (105, 106) of the thermal protection shield (102) are connected to tabs (101a, 101b) that are secured to a fastener strip (101) on the downstream portion of the stationary first exit cone segment (12).
